(19) Europäisches Patentamt
European Patent Office
Office européen des brevets

(11) **EP 3 035 014 A1**

(12) **EUROPEAN PATENT APPLICATION**

(43) Date of publication:
**22.06.2016 Bulletin 2016/25**

(51) Int Cl.:
**G01J 3/46** (2006.01)    **G09G 3/20** (2006.01)
**G09G 5/02** (2006.01)

(21) Application number: **14307027.4**

(22) Date of filing: **15.12.2014**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Blondé, Laurent
35576 CESSON-SÉVIGNÉ (FR)**

</td><td>

• **Asano, Yuta
35576 CESSON-SÉVIGNÉ (FR)**
• **Morvan, Patrick
35576 CESSON-SÉVIGNÉ (FR)**

(74) Representative: **Browaeys, Jean-Philippe et al
Technicolor
1, rue Jeanne d'Arc
92443 Issy-les-Moulineaux (FR)**

</td></tr>
</table>

(54)    **Apparatus to compare and/or classify the color perception characteristics of observers**

(57)    A specific set of primaries for a reference color device and for a match display device is defined, which allows a better differenciation and/or a more efficient classification of the color perception characteristics of observers, when these devices are used in the apparatus.

Fig.8

**Description**

<u>Technical Field</u>

The invention relates to an apparatus for the classification of observers according to their perception of colors.

<u>Background Art</u>

Various studies have shown that variations in observers' colour vision characteristics can be a significant issue in modern display colourimetry, since peaky colour primaries (commonly red, green and blue) are often used to achieve more vivid and saturated colours.

The colour matching functions are very well known as the numerical description of the chromatic response of an observer. The CIE has defined a set of three colour-matching functions ("CMF"), called $\bar{x}(\lambda)$, $\bar{y}(\lambda)$, and $\bar{z}(\lambda)$, which can be thought of as the spectral sensitivity curves of three linear light detectors that yield the tristimulus values X, Y, and Z in the CIE XYZ linear visual colour space.

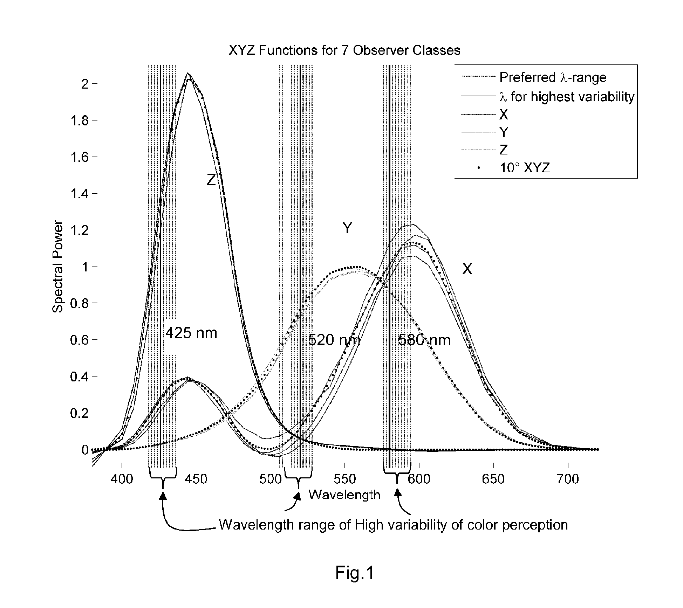

The CIE has defined a "standard observer", together with two sets of standard observer CMFs, depending on the field of view : CIE-1964 10° or CIE-1931 2°. As illustrated on figure 1 for CIE-1964 10°, these three CMF functions are respectively for the long-, medium- and short- wavelength range.

According to basic colorimetry, the tristimulus values X,Y,Z as expressed in the CIE-XYZ color space, of a color of an object as perceived by an observer are obtained by the integration, over the range of visible wavelengths, of the product of the spectral power distribution $S_\lambda$ of a light source, of the spectral reflectance of the object $R_\lambda$, and of the color matching functions of this observer $\bar{x}\lambda$, $\bar{y}\lambda$ and $\bar{z}\lambda$. If k is a normalization factor that assigns the luminance of white an arbitrary value of 100, we have therefore the following equations:

$$X = k\sum_{\lambda} S_\lambda R_\lambda \bar{x}_\lambda \Delta\lambda; \quad Y = k\sum_{\lambda} S_\lambda R_\lambda \bar{y}_\lambda \Delta\lambda; \quad Z = k\sum_{\lambda} S_\lambda R_\lambda \bar{z}_\lambda \Delta\lambda$$

$$k = \frac{100}{\sum_{\lambda} S_\lambda \bar{y}_\lambda \Delta\lambda}$$

Since the tristimulus values X,Y,Z of a color perceived by an observer are computed by wavelength-wise integration, two colour tristimuli with different spectral power distribution can give rise to identical visual response X,Y, Z for a given observer, leading to a "metameric" colour match between these two colour tristimuli. Such a match established by a first observer can, and quite often does, lead to a mismatch for another second observer, when the second observer is visually characterized by a set of CMFs that is different from the first one. This phenomenon is commonly termed as observer metamerism or observer metameric failure.

Various recent studies have shown that observer variability can be a significant issue notably in modern display colourimetry. The set of three CMFs characterizing the color perception of an observer can often be significantly different from the set of three CMFs characterizing the color perception of a standard observer, as defined by the CIE. In recent studies, the MCDM (the mean color difference from the mean) and maximum values of difference in color perception between observers were found to be as high as 1.4 and 3.3 $\Delta E^*_{00}$ respectively, as expressed in the CIE 1976 L*a*b* color space. These values mean that such differences can be actually perceived by an expert as well as by an untrained observer.

The patent application WO2011-124698 describes a method for the classification of observers according to their visual characteristics. This document starts with the definition of different classes of observer, for instance seven classes, each class being characterized by the colour perception of a specific observer, who is somehow an "average" observer of this class. Preferably, each class is characterized by the set of CMF characterizing the color perception of his specific "average" observer. Then, this document describes how to assign one of these defined classes to an observer.

To implement such an assignment, this patent application WO2011-124698 describes an apparatus for assigning an actual color observer to at least one of a plurality of M classes of color observers $(Cl)_{i=1 \text{ to } M}$, wherein each class is characterized by specific color perception characteristics, wherein $M \geq 3$, comprising:

- a reference color display device configured for displaying colors using a first set of primaries $(DP)^R$ to display colors, and a match color display device configured for displaying colors using a second set of primaries $(DP)^D$;

- a color controller configured for controlling said reference color display device in order to display successively each color $(CP)_n$ of a test chart comprising a plurality of N different colors $(CP)_{n=1 \text{ to } N}$, and, each time a color $(CP)_n$ of said test chart is displayed by said reference color display device, for controlling said match display device in order to display said colour $(CP)_n$ in M different ways, such that each way of displaying said color corresponds to a different observer class $(CI)_i$ such that said way of displaying displays a color which is perceived as the same color as said color displayed by said reference color display device by an observer having color perception characteristics characterizing said observer class $(CI)_l$;

- a determination controller configured to allow said actual color observer to determine, each time a color $(CP)_n$ of said test chart is displayed by said reference colour display device and in M different **ways** by said test colour device, which of these M different ways displays a color which is perceived by said actual observer as matching the best with his perception of the color displayed by said reference color device;

- a class assignment module configured for assigning the actual observer to at least one of the most frequent observer class(es) among the observer class(es) corresponding to the N displaying ways selected through the setting/determination controller.

The first set of primaries comprises a first red primary, a first green primary and a first blue primary, the second set of primaries comprises a second red primary, a second green primary and a second blue primary, and each of those primaries have a wavelength distribution centered on a main wavelength.

The document WO2011-124698 proposes to use a first set of LED for the first set of primaries and a second set of LED for the second set of primaries. For these LEDs, this document discloses, in reference to its figure 13, the spectral characteristics that best suit some criteria : LEDs of the first set with peak emission at 644 nm for the first red primary, 506 nm for the first green primary and 472 nm for the first blue primary of the reference display device, and LEDs of the second set with peak emission at 592 nm for the second red primary, 520 nm for the second green primary, and 462 nm for the second blue primary for the match display device.

Moreover, in this document:

- two LEDs of one of the two sets (here, match display device) emits right in the wavelength range of high variability of color perception, namely in a region having a width of about 25 nm and centered on 580 nm and on 520 nm, and

- the three LEDs of the other set (here, reference display device) emits out of these wavelength ranges of high variability of color perception, i.e. out of the ranges 580 nm $\pm$ 12 nm and 425 nm $\pm$ 12 nm.

The spectral characteristics of emission of the LEDs of the two sets described in the 2nd example of apparatus of this document are detailed on table 1.

Table 1

| 1st set - reference | 2nd set - test |
|---|---|
| • Blue : 472 nm $\pm$ 12 nm | • Blue : 462 nm $\pm$ 15.0 nm |
| • Green : 506 nm $\pm$ 25.0 nm | • Green : 520 nm $\pm$ 25.0 nm |
| • Red : 644 nm $\pm$ 12 nm | • Red : 592 nm $\pm$ 15.0 nm |

Summary of invention

Such criteria as reminded above concerning the main central wavelength of emission of each primary gives good results in term of differentiation of color perception characteristics between observers belonging to different classes. According to the invention, it is proposed to significantly improve such a differentiation through new criteria concerning the main central wavelength of emission of some primaries.

A subject of the invention is notably an apparatus for comparing/classifying color perception characteristics of an actual color observer in comparison with at least one set of color perception characteristics, comprising:

- a reference color display device configured for displaying colors using a first set of primaries to display colors, and

- a match color display device configured for displaying colors using a second set of primaries;

wherein said first set of primaries comprises a first red primary, a first green primary and a first blue primary, wherein said second set of primaries comprises a second red primary, a second green primary and a second blue primary, wherein each of those primaries have a wavelength distribution centered on a main wavelength, and wherein the main wavelength of one among the first and second blue primary is inferior to 425 nm, and in that the main wavelength of the other among the first and second blue primary is superior to 425 nm.

Thank to this new criteria concerning the main central wavelength of emission of some primaries, the differentiation of color perception characteristics between observers belonging to different classes is significantly improved in comparison with the prior art.

Besides the reference color display device and the match color display device, the apparatus comprises also means allowing the actual observer to compare his perception of a color displayed by the reference color display device and his perception of a color displayed by the match color display device. In a first embodiment, the apparatus comprises also means allowing the actual observer to select, over a plurality of colors displayed by the match color display device, which of these colors he/she perceives as matching the best the color displayed by the reference color display device. In a second embodiment, the apparatus comprises also means allowing the actual observer to shift the color displayed by the match display device until he/she perceives a match between the color displayed by the reference color display device and the color displayed by the match color display device.

The apparatus comprises preferably:

- a color controller configured:

  - for controlling said reference color display device in order to display successively each color patch $(CP)_n$ of a test chart comprising a plurality of N different color patches $(CP)_{n=1\,to\,N}$, and,
  - each time a color patch $(CP)_n$ of said test chart is displayed by said reference color display device, for controlling said match display device in order to display said color patch $(CP)_n$ of said test chart in at least one displaying way, wherein each of this/these at least one displaying way(s) corresponds to a different set of color perception characteristics and displays a color which is perceived as the same color as that displayed by said reference color display device when displaying said color patch $(CP)_n$ by a class observer having color perception characteristics of the set corresponding to said displaying way;

- A setting/determination controller configured to allow said actual color observer, each time a color patch $(CP)_n$ of said test chart is displayed by said reference colour display device and by said test colour display in this/these at least one displaying way(s),

  - to set a color display setting shift to apply to said controlling of the match display device such that said match display device displays a color which is perceived by said actual observer as matching the best his perception of the color displayed by said reference color display, and/or
  - to determine which of the M different displaying ways displays a color which is perceived by said actual observer as matching the best with his perception of the color displayed by said reference color device, said determined displaying way corresponding to a set of color perception characteristics defining an observer class;

- An averaging/assignment module configured:

  - for averaging the different color display setting shifts that have been set by said setting/determination controller over the N different color patches $(CP)_{n=1\,to\,N}$ that have been displayed, resulting in an average color setting shift characterizing the color perception characteristics of said actual observer in comparison with those of the at least one set of color perception characteristics, and/or
  - for assigning said actual observer to at least one observer class defined by a set of color perception characteristics corresponding to at least one of the most frequent determined displaying ways among the N different displaying ways that have been determined by said setting/determination controller over the display of the N different color patches $(CP)_{n=1\,to\,N}$, resulting in the classification of said actual observer to said at least one assigned observer class characterizing the color perception characteristics of said actual observer.

Any color controller for controlling said reference color display device and said match display device, any setting/determination controller configured to compare and/or classify the color perception characteristics of this actual color observer can be used instead.

The average color setting shift provided by the averaging module characterizes a color perception shift between the color perception of actual observers and the color perception characterized by the at least one set of color perception characteristics. When this set is the set of CMFs of a CIE standard observer, the apparatus allows to compare actual observers to a standard observer.

The assignment of an actual observer to an observer class allows the classification observers according to their color perception characteristics. A set of color perception characteristics, as for instance a set of CMFs, characterizes an observer class. Similarly, an observer, who may be virtual, having a color perception corresponding to this set, defines a "class observer". For instance, the set of CMFs of the CIE standard observer characterizes a CIE standard class and a class observer being the CIE standard observer. When the apparatus is used for classification of observers among M different observer classes, the color perception characteristics of the M different observer classes are different from one class to another.

The above definition of the first and second set of primaries of the color devices of the apparatus emphasizes advantageously the precision of the comparison or classification of observers. There is no specific requirement for the green primaries of these sets, because it has been observed that observer variability within the range of wavelengths corresponding to green is low, i.e. notably between 500 nm and 550 nm. It means that Observer variability in the lightness direction L* of the La*b* color space was found to be small. It means that, for an observer, the matching of colors generated by two different sets of primaries is basically two-dimensional in the a* b* plane of the La*b* color space.

Preferably, each time the reference color display device displays a color patch $(CP)_n$ of the test chart, the match display device displays simultaneously this color patch $(CP)_n$ at least in one of the M different displaying ways, in order to allow the actual observer, i.e. the observer to classify, to compare his/her perception of the color displayed by the reference color display device and the color(s) displayed simultaneously by the match display device. It means that each way of displaying a color patch $(CP)_n$ can be implemented for instance successively during the display of the same color patch $(CP)_n$ by the reference display device. On the opposite, all the ways of displaying a color patch $(CP)_n$ of the test chart by the test color device can be implemented simultaneously during the display of the same color patch $(CP)_n$ by the reference display device. All variants between the two above embodiments can be also implemented.

Preferably, the wavelength shift between the main wavelengths of the blue primaries is superior to 60 nm. Such a definition of the sets of primaries still improves the precision of comparison and/or classification of observers brought by the apparatus.

Preferably, the main wavelength of one among the first and second red primary is superior to 600 nm, and in that the main wavelength of the other among the first and second red primary is inferior to 600 nm. Such a definition of the sets of primaries still improves the precision of comparison and/or classification of observers brought by the apparatus.

Preferably, the wavelength shift between the main wavelengths of the red primaries is superior to 60 nm. Such a definition of the sets of primaries still improves the precision of comparison and/or classification of observers brought by the apparatus.

Preferably, the distribution of wavelengths around the main wavelength of each primary gives a full width mid-height (FWMH) inferior or equal to 50 nm.

Preferably, the distribution of wavelengths around the main wavelength of each of the blue primaries and the red primaries is inferior or equal to 30 nm. Such spectrally narrow primaries still improve the precision of comparison and/or classification of observers brought by the apparatus.

Preferably, the N different color patches $(CP)_{n=1\ to\ N}$ of said test chart comprise at least five different achromatic color patches. As a matter of fact, such achromatic color patches allow better comparisons and/or more efficient classifications of observers, because they advantageously provide high variability of color perception characteristics.

A subject of the invention is also a method for comparing/classifying color perception characteristics of an actual color observer in comparison with at least one set of color perception characteristics, using a reference color display device configured for displaying colors using a first set of primaries to display colors, and a match color display device configured for displaying colors using a second set of primaries,

wherein said first set of primaries comprises a first red primary, a first green primary and a first blue primary,

wherein said second set of primaries comprises a second red primary, a second green primary and a second blue primary,

wherein each of those primaries have a wavelength distribution centered on a main wavelength,

wherein the main wavelength of one among the first and second blue primary is inferior to 425 nm, and in that the main wavelength of the other among the first and second blue primary is superior to 425 nm,

said method comprising:

- controlling said reference color display device in order to display a first color patch $(CP)_1$ of a test chart comprising a plurality of N different color patches $(CP)_{n-1\ to\ N}$, and,
- controlling said match display device in order to display said color patch $(CP)_n$ of said test chart in at least one displaying way, wherein each of this/these at least one displaying way(s) corresponds to a different set of color perception characteristics and displays a color which is perceived as the same color as that displayed by said reference color display device when displaying said color patch $(CP)_n$ by a class observer having color perception characteristics of the set corresponding to said displaying way;
- allowing said actual color observer:

  - to set a color display setting shift to apply to said controlling of the match display device such that said match display device displays a color which is perceived by said actual observer as matching the best his perception of the color displayed by said reference color display, and/or

-    to determine which of the M different displaying ways displays a color which is perceived by said actual observer as matching the best with his perception of the color displayed by said reference color device, said determined displaying way corresponding to a set of color perception characteristics defining an observer class,

-    controlling said reference color display device in order to display another color patch of the test chart, and reiterating the steps above with this other color patch until all color patch of the test chart are tested, and
after all settings and/or determinations are performed by said actual observer for each color patch $(CP)_{n=1 \text{ to } N}$ of said test chart:

-    averaging the different color display setting shifts that have been set over the N different color patches $(CP)_{n=1 \text{ to } N}$ that have been displayed, resulting in an average color setting shift characterizing the color perception characteristics of said actual observer in comparison with those of the at least one set of color perception characteristics, and/or
-    assigning said actual observer to at least one observer class defined by a set of color perception characteristics corresponding to at least one of the most frequent determined displaying ways among the N different displaying ways that have been determined over the display of the N different color patches $(CP)_{n=1 \text{ to } N}$, resulting in the classification of said actual observer to said at least one assigned observer class characterizing the color perception characteristics of said actual observer.

Brief description of drawings

The invention will be more clearly understood on reading the description which follows, given by way of non-limiting example and with reference to the appended figures in which:

-    Figure 1, already mentioned, illustrates the well-known set of CMFs of the CIE 10° standard observer;
-    Figure 2 illustrates the distribution of color perception characteristics among 50 different observers in the L*a* plane of the Lab color space;
-    Figure 3 illustrates the distribution of color perception characteristics among the same 50 different observers in the L*b* plane of the Lab color space;
-    Figure 4 represents the spectral power distribution of the three primaries of the first set of the reference color device of the apparatus of both embodiments of the invention;
-    Figure 5 represents the spectral power distribution of the three primaries of the second set of the match color device of the apparatus of both embodiments of the invention;
-    Figure 6 illustrates the bipartite field of the apparatus of both embodiments of the invention;
-    Figure 7 illustrates a schematic diagram of an apparatus of the invention;
-    Figure 8 shows a flowchart illustrating a method of classification of observers using the first embodiment of the apparatus according to the invention.

Description of embodiments

Two main embodiments are disclosed below:

-    a first embodiment of an apparatus adapted to assign an actual observer to at least one class of observers among a plurality of observer classes, each of these observer classes being characterized by a given set of color perception characteristics, notably by a given set of CMFs. This first embodiment is directed toward the classification of observers.
-    a second embodiment of an apparatus adapted to evaluate a shift between the color perception characteristics of an actual observer and those of a standard observer characterized by a given set of color perception characteristics, notably the set of CMFs of the CIE standard observer. This second embodiment is directed toward the comparison between observers.

Both apparatus have notably in common:

-    a test chart of 14 colour patches,
-    a reference display device,
-    a match display device.

Definition of an optimized test chart of 14 colour patches

Each of the different colour patches to be used in both embodiments for observers comparison or classification are basically tailored to produce large differences of color perceptions between observers having different color perception characteristics.

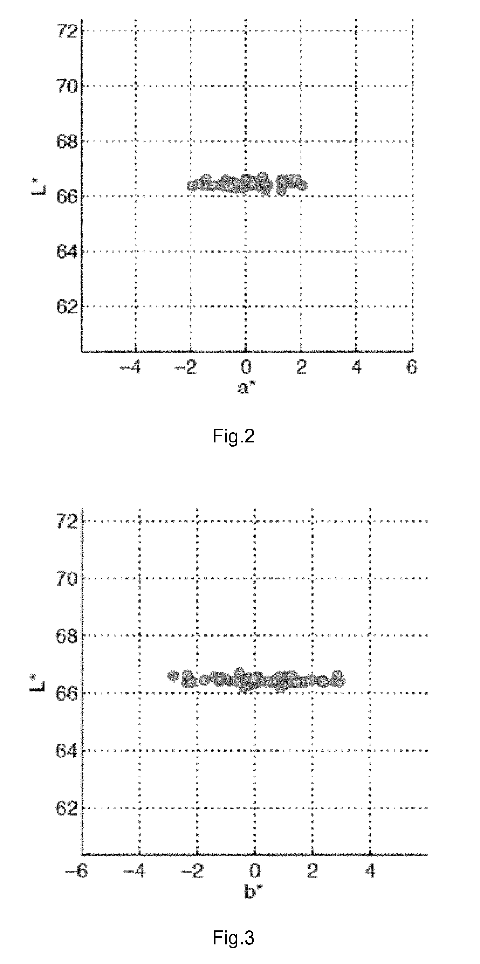

Using the below apparatus according to the second embodiment, the variability of color perception of a panel of 50 different observers was measured. Variability was measured through MCDM, i.e. "mean color difference from the mean", the color difference being measured, in ΔE00 units, as a distance in the CIE 1976 L*a*b* color space. Increasing MCDM indicates increasing observer variability. The current standard color difference formula, CIEDE2000 (ΔE00) was used to compute color differences. The distribution of the results obtained for these 50 different observers is shown on figures 2 and 3: L* plotted versus a* on figure 2, and L* plotted versus b* on figure 3. These results show that the variability of color perception characteristics is mainly distributed along the a* and b* axis of the Lab color space, but not along the L* axis.

In the embodiments of the apparatus described below, a selection of the 24 colour patches of a usual Color-Checker reference colour chart, all taken under illuminant E (equal energy illuminant), is used for the comparison/classification of observers. More particularly, one selects the colour patches of the test chart that produce the largest colour differences ($\Delta E^*_{00}$), for instance for the 50 observers used above. This selection is described below.

Table 2 below lists these 24 colour patches, where "n" is the number of the color patch CP as referenced in the reference color chart. In this table, ranks rank the variability of color perception over the 50 observers, rank 1 corresponding to the highest variability and rank 24 to the lowest variability. According to this determination, the highest ranks in these N=24 colour patches correspond to different shades of grey (ranks 1 to 5 and 9), green, green-yellow and blue-green and blue, but no or few shades of yellow or red are present at ranks above 14, i.e. with lower variability of color perception compared to rank 14. It means that observers are more sensitive in variations of hue close to gray colors, i.e. **achromatic colors** or low saturated colors.

## Table 2

| Rank | 1 | 2 | 3 | 4 | 5 | 6 | 7 | 8 | 9 | 10 | 11 | 12 | 13 | 14 | 15 | 16 |
|------|----|----|----|----|----|----|----|----|----|----|----|----|----|----|----|----|
| "n"  | 19 | 20 | 21 | 22 | 23 | 3  | 2  | 5  | 24 | 6  | 1  | 18 | 10 | 12 | 16 | 7  |

Patches above rank 16 are notably patches n= 4, 8, 9, 11, 13, 14, 15, 17. Patches n= 4, 11, 14, including a majority of green exhibit low variability of color perception.

Saturated color patches n= 8, 11, 13, 14, 15, 16, 17 exhibit low variability of color perception as well.

Exceptions to this saturation rule are patches n= 12 (skin tone) and n= 18 (blue).

To be noted: patches n=16 and n=18 are out of gamut for some observers.

Therefore, the first fourteen color patches having the highest variability are chosen as being the most suitable test colors for observer comparison or classification using the below methods, then forming a **test chart** of colour patches $(CP)_{1 \text{ to } N=14}$. This test chart comprises more than five achromatic color patches, namely 6.

This choice of color patches having the highest variabilities of color perceptions is also corroborated by the finding, reminded above, of the three regions of wavelengths of highest variability of color perception characteristics among observers belonging to different classes, these regions being respectively centered on 580 nm, 520 nm and 425 nm, and having a width of about 25 nm.

First Main Embodiment : apparatus for assigning an actual color observer to at least one among M classes of color observers $(CI)_{i-1 \text{ to } M}$:

This first embodiment concerns an apparatus adapted to assign an actual observer to at least one class of observers among a plurality of observer classes, each of these observer class being characterized by a given set of color perception characteristics, notably by a given set of CMFs. This first embodiment is directed toward the classification of observers.

Definition of M classes of color observers $(CI)_{i=1 \text{ to } M}$ :

Seven different classes of observers are defined, for instance as described in WO2011-124698. Each class is defined by a specific set of CMFs, each set representing specific color perception characteristics. The vertical thin black lines on figure 1 indicate the wavelengths where variances among the different CMFs characterizing these classes are the largest. Three regions of wavelengths are shown, respectively centered on 580 nm, 520 nm and 425 nm, and having a width of about 25 nm. Note that these wavelength regions are specific to the optimal CMFs, are thus fundamental, and independent of the display devices used in the apparatus for observer classification.

The apparatus for assigning an actual color observer to one of the seven classes of color observers $(Cl)_{i=1 \text{ to } M=7}$ comprises:

- a reference color display device configured for displaying colors using a first set of primaries $(DP)^R$ to display colors, and a match color display device configured for displaying colors using a second set of primaries $(DP)^D$ ;
- a color controller configured for controlling the reference color display device in order to display successively each color patch $(CP)_{n=1}$ to 14 of the test chart, and, each time a color patch $(CP)_n$ of this test chart is displayed by the reference color display device, for controlling the match display device in order to display this colour patch $(CP)_n$ in M=7 different ways;
- A setting/determination controller configured to allow the color observer to determine, each time a color patch $(CP)_n$ of the test chart is displayed a) by the reference colour display device and b) in M=7 different ways by the test colour device, which of these M=7 different ways displays a color which is perceived by the actual observer as matching the best with his perception of the color displayed by the reference color device;
- An averaging/assignment module configured for assigning the actual observer to at least one of the most frequent observer class(es) among the observer class(es) corresponding to the N=14 displaying ways determined by the actual observer through the setting/determination controller, over the display of the 14 different color patches $(CP)_{n-1 \text{ to } 14}$.

The result provided by the apparatus is then the classification of the actual observer to the at least one assigned observer class among the 7 observer classes.

The first set of primaries corresponds to a first set of LEDs comprising a first red LED emitting a first red primary, a first green LED emitting a first green primary, and a first blue LED emitting a first blue primary.

The second set of primaries corresponds to a second set of LEDs comprising a second red LED emitting a second red primary, a second green LED emitting a second green primary, and a second blue LED emitting a second blue primary.

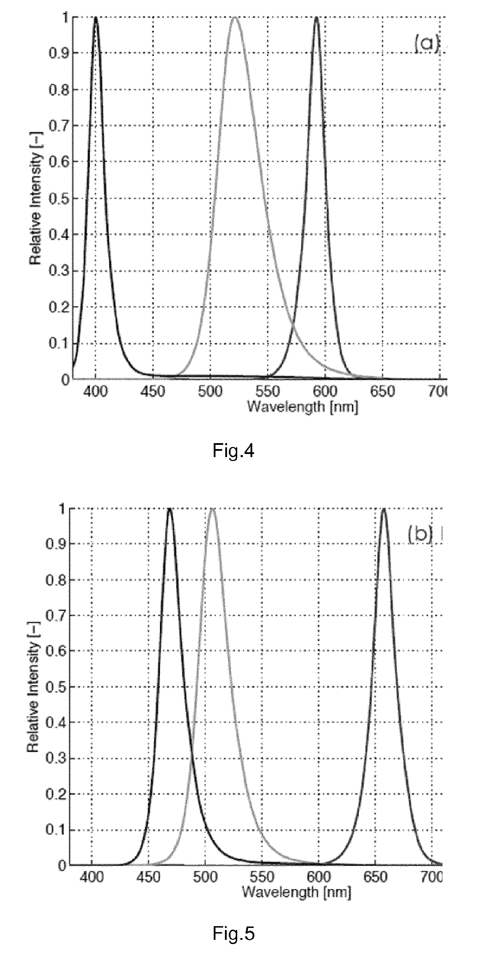

The LEDs - corresponding to the primaries - are chosen such that they have a wavelength distribution centered on a main wavelength, as illustrated on figures 4 and 5, as detailed on table 3 below:

Table 3

| 1st set (reference) SW | 2nd set (test) LW |
|---|---|
| • Blue : 400 nm $\pm$ 12.5 nm | • Blue : 470 nm $\pm$ 15.0 nm |
| • Green : 520 nm $\pm$ 25.0 nm | • Green : 510 nm $\pm$ 20.0 nm |
| • Red : 590 nm $\pm$ 12.5 nm | • Red : 660 nm $\pm$ 15.0 nm |

where the values after the symbol $\pm$ are related to the mid-width of the wavelength distribution at mid height of the wavelength peak.

The main wavelength of the blue primary of the first set is inferior to 425 nm, the main wavelength of the blue primary of the second set is superior to 425 nm, and the wavelength shift between the main wavelengths of the two blue primaries is superior to 60 nm, here equal to 70 nm.

The main wavelength of the red primary of the second set is superior to 600 nm, the main wavelength of the red primary of the first set is inferior to 600 nm, and the wavelength shift between the main wavelengths of the two red primaries is superior to 60 nm, here equal to 70 nm.

The distribution of wavelengths around the main wavelength of each primary gives a full width mid-height (FWMH) inferior or equal to 50 nm, here equal to 50 nm. The distribution of wavelengths around the main wavelength of each of the blue primaries and the red primaries is inferior or equal to 30 nm, here equal to 30 nm.

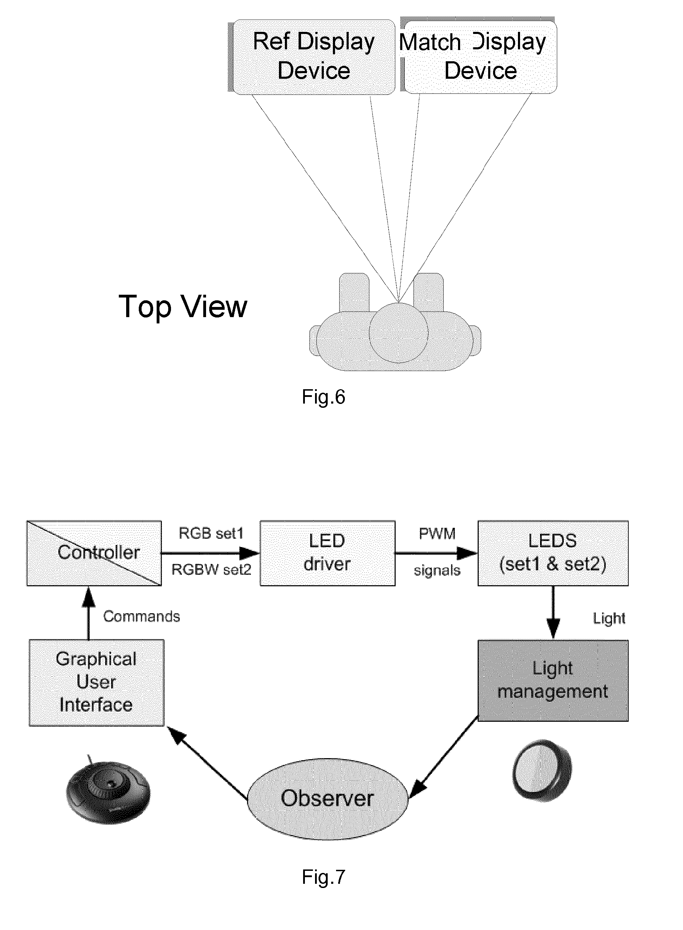

The apparatus has two corresponding integrating chambers, and is configured to present a bipartite field to the observer, as shown on figure 6, such that the bipartite field appeared for instance approximately 10° in visual angle (from 8° to 12°). The bipartite field has a left half for displaying colors generated by the reference display device and a right half for displaying colors generated by the match display device.

Based on the above spectral characteristics of emission of the LEDs of the two LED sets, the color controller is configured to be able to send to each color display device (reference and test) appropriate control signals so as to display on both halves of the bipartite field each color patch $(CP)_{n=1 \text{ to } N=14}$ of the test chart.

More specifically, each time a color patch $(CP)_n$ of this test chart is displayed by the reference color display device on the left part of the bipartite field, this color controller is configured to send to the match color display device appropriate control signals to display the same color patch $(CP)_n$ on the right part of the bipartite field in M=7 different ways. This color controller is configured such that the M=7 ways of displaying a same color patch $(CP)_n$ corresponds to a different observer class $(CI)_i$. Each way of displaying a color patch $(CP)_n$ using the match display device, which corresponds to a given observer class $(CI)_i$, is configured such that it produces a color which is perceived as the same color which is displayed by the reference color display device when displaying the same color patch $(CP)_n$, by an observer having basically the color perception characteristics characterizing this observer class $(CI)_i$. For any given color patch of the test chart, these different ways of display can be performed simultaneously on different segments of the right part of the bipartite field, or successively on the whole right part of the bipartite field, or a mix of these two methods.

Method of classification of an actual observer in one observer class, using the apparatus of the first embodiment:

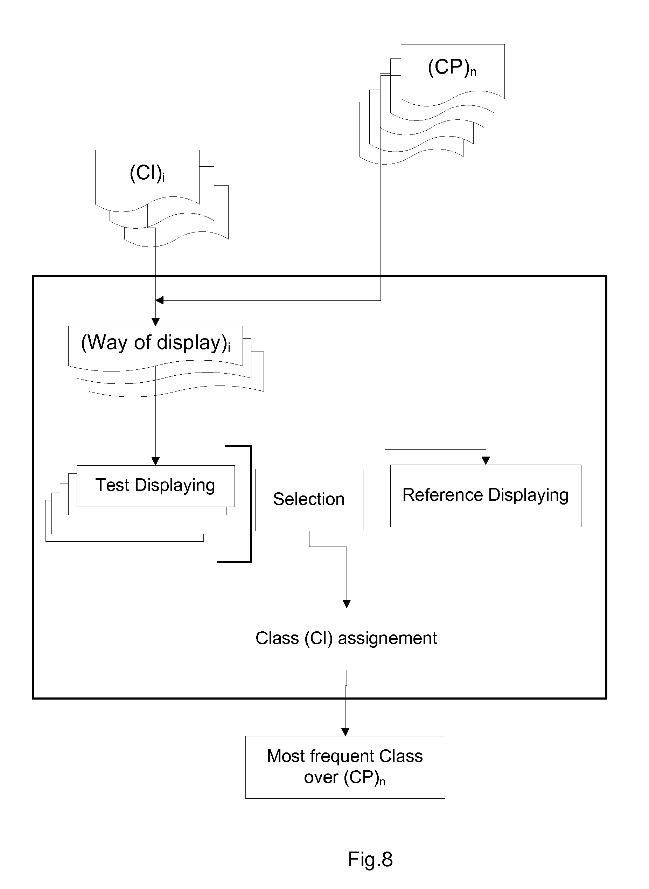

The method is described in reference to figure 8.

An actual observer to classify is installed to observe both halves of the bipartite field.

Then, the reference display device will display successively each color patch $(CP)_n$ of the test chart in the left half of the bipartite field.

Each time the reference display device displays a color patch $(CP)_n$ of the test chart in the left half of the bipartite field, the match display device displays the same colour $(CP)_n$ of the test chart in the right half of the bipartite field in the M=7 different ways. This process is controlled by the color controller. These M=7 different displaying ways can be performed simultaneously or successively, or a mix of both. Then, each time a color patch $(CP)_n$ of the test chart is displayed in the left half of the bipartite field, the same color patch is displayed in a least one displaying way in the right half of the bipartite field, such that the observer observing the whole bipartite field can compare its perception of the color displayed in the left half with its perception of the at least one color displayed in the right half.

Then, through such comparison(s) of color perceptions over all the M=7 different displaying ways, using the setting/determination controller of the setting/determination controller, the observer then **selects** which of these M=7 different ways displays a color which he/her perceives as matching the best his perception of the color displayed simultaneously by the reference display device. The selected way, associated with a specific class of observers, is stored in a memory of the apparatus.

This process is repeated for each of the N=14 color patches $(CP)_{n-1 \text{ to } 14}$ of the test chart, such that the memory stores N=14 selections. As these 14 selections do not always correspond to the same observer class, the class assignment module assigns the observer to the most frequent observer class among the observer class(es) corresponding to the displaying ways selected through the setting/determination controller. It means for instance that, if there are 3 selections corresponding to class Nb 1, 2 selections corresponding to class Nb 4, 16 selections corresponding to class Nb 6, and 3 selection corresponding to class Nb 7, and no selections for the other classes, then the observer is assigned to class Nb 6. If 2 classes get approximately the same number of selections, then the observer is assigned to these two classes. For instance, if there are 9 selections corresponding to class Nb 1, 2 selections corresponding to class Nb 4, 10 selections corresponding to class Nb 6, and 3 selection corresponding to class Nb 7, and no selections for the other classes, then the observer is assigned to both class Nb 1 and class Nb 6.

The above method of classification that can be implemented by the apparatus of the first embodiment allows to assign any actual observer to at least one of the above-defined classes and to its/their corresponding color perception characteristics, namely corresponding set(s) of CMFs.

Second Main Embodiment : apparatus for comparing an actual color observer to a CIE-standard observer

This second embodiment concerns an apparatus adapted to evaluate a shift between the color perception characteristics of an actual observer and those of a standard observer characterized by a given set of color perception characteristics, here the set of CMFs of the CIE standard observer. This apparatus has some similarities with the apparatus described in the document US5103407. This second embodiment is directed toward the comparison between observers.

The apparatus for comparing an actual color observer to a CIE-standard observer comprises:

- The same reference color display device as in the first embodiment, and the same match color display device as in the first embodiment;
- a color controller configured for controlling the reference color display device in order to display successively each color patch $(CP)_{n=1 \text{ to } 14}$ of the test chart, and, each time a color patch $(CP)_n$ of this test chart is displayed by the reference color display device, for controlling the match display device in order to display this colour patch $(CP)_n$ in one way defined below;

- A setting/determination controller configured to allow the color observer to set, each time a color patch $(CP)_n$ of the test chart is displayed by the reference colour display device and, in said one way, by the test colour device, a color display setting shift to apply to the controlling of the match display device such that this match display device displays a color which is perceived by the actual observer as matching the best his perception of the color displayed by the reference color display.

- An averaging/assignment module configured for averaging the different color display setting shifts that have been set by the actual observer through the setting/determination controller over the N=14 different color patches $(CP)_{n-1 \text{ to } 14}$ that have been displayed.

The result provided by the apparatus is then an average color setting shift characterizing the color perception characteristics of the actual observer in comparison with those of the CIE-standard observer, characterized by its set of CMFs.

The test chart is the same as in the first embodiment.

As in the first embodiment, the color controller is configured to be able to send to each color display device (reference and test) appropriate control signals so as to display on both halves of the bipartite field each color patch $(CP)_{n=1 \text{ to } N=14}$ of the test chart.

More specifically, each time a color patch $(CP)_n$ of this test chart is displayed by the reference color display device on the left part of the bipartite field, this color controller is configured to send to the match color display device appropriate control signals to display the same color patch $(CP)_n$ on the right part of the bipartite field in a way adapted to produce a color which is perceived as the same color as that displayed by the reference color display device by a CIE-standard observer characterized by its set of CMFs.

Such a display of this color patch $(CP)_n$ by both the reference display device and the match display device being set, the setting/determination controller is adapted to change the color display settings of the display of this color patch $(CP)_n$ by the match display device, such as to allow the actual observer to have this test display device displaying a color that is perceived by him/her as the same color displayed by the reference display device. The change of settings, i.e. the color display setting shift, that is necessary to get such a match is representative of the color perception characteristics of the observer in comparison with those of the CIE-standard observer, at least for this color patch $(CP)_n$.

The change of the color display settings of the display of a color patch $(CP)_n$ by the match display device that may be actuated by the observer through the setting/determination controller can generally be represented by variations $\Delta R$, $\Delta G$, $\Delta B$ in the RGB color space of the match display device. Practically speaking, it means that the setting/determination controller allows preferably to change independently $\Delta R$, $\Delta G$ and/or $\Delta B$. In order to allow the color display setting shift than has been set by an observer actuating this setting/determination controller to better represent the color perception characteristics of the observer in comparison with those of the CIE-standard observer, this color display setting shift is preferably represented in a more perceptual color space as, for instance, Lab or HSV. Preferably, the apparatus comprise a module configured to convert the variations of the color display settings from a representation in the RGB color space to a representation in the perceptual color space. The resulting color display setting shift will be then represented in this perceptual color space, therefore allowing a better representation of the color perception characteristics of the observer in comparison with those of the CIE-standard observer.

## Method of comparison of an actual observer with a standard observer

An actual observer to classify is installed to observe both halves of the bipartite field.

Then, the reference display device will display successively each color patch $(CP)_n$ of the test chart in the left half of the bipartite field.

Each time the reference display device displays a color patch $(CP)_n$ of the test chart in the left half of the bipartite field, the match display device displays the same colour $(CP)_n$ of the test chart in the right half of the bipartite field in a way adapted to produce a color which is perceived as the same color as that displayed by the reference color display device by a CIE-standard observer characterized by its set of CMFs.

While observing a color patch $(CP)_n$ as displayed in the whole bipartite field, the observer will perceive a difference of color between the two halves of this bipartite field. He/she will then actuates the setting/determination controller in order to change the color display settings of the match display device up to a situation where a match of color perception is obtained by the observer between the colors displayed in the two halves of the bipartite field. The change of color display settings corresponding to this matching situation is considered as the color display setting shift for this color patch $(CP)_n$. Then, using the conversion module above, this color display setting shift is represented in the perceptual color space, generally by three color coordinates.

This process is repeated for each of the N=14 color patches $(CP)_{n-1 \text{ to } 14}$ of the test chart, such that the memory stores N=14 color display setting shifts, each of these shifts being represented by three color coordinates.

Then, using the averaging/assignment module, each of the three coordinates of the fourteen color display setting shifts are averaged, resulting in three average color coordinates representing, in the perceptual color space, a difference between the color perception characteristics of the observer and those of the standard observer. In other words, the average color setting shift that is represented by these average color coordinates characterizes the color perception characteristics of the actual observer in comparison with those of the standard observer.

For the apparatus of both embodiments above, the color controller, the setting/determination controller, the averaging/assignment module, and the optional conversion module may be provided in a manner known per se through the use of dedicated hardware including memories, as well as hardware including processors capable of executing software in association with appropriate software. Such memories are notably adapted to store color control signals related to each color patch of the test chart for each display device, to store the displaying ways that are set and/or determined on the setting/determination controller by an observer. For the first embodiment, the software is also configured for selecting, through software statistic tools, the most frequent observer class among the observer class(es) corresponding to the M=7 displaying ways selected through the setting/determination controller and stored in the memories.

In addition, various other peripheral units may be connected to the apparatus, such as a monitor to display a graphical user interface, a data storage unit and a printing unit.

The softwares integrated in the apparatus preferably comprise also a graphical user interface for administering the observer comparing/classifying method described in detail above and an interface to communicate with the color controller configured to perform automatically the different steps of the classification method. The apparatus can be reduced to a tiny device either integrated with a video color display device, or a stick-on calibrator device that can be attached to the screen of such a display device during its calibration. In a preferred implementation the display color device will form the reference half of the bipartite field, and the calibrator device generated color will form the other test half.

The hardware may include a single shared processor, or a plurality of individual processors, some of which may be shared. The softwares may be implemented as an application program tangibly embodied on a program storage unit. The application program may be uploaded to, and executed by, the modules.

Advantages

Thanks to the specific spectral distribution of emission of the LEDs chosen for the first set of primaries and for the second set of primaries of the apparatus above as shown in table 3, the apparatus allows to better differentiate and discriminate observers according to their color perception characteristics, better than with the spectral distribution of emission of the LEDs chosen for the first set of primaries and for the second set of primaries according to the prior art and as shown in table 1 above.

The differentiating results below illustrate such an improvement. There are evaluated based on an inter-observer variability over different observers illustrating the differentiation potential of the apparatus, and on intra-observer variability illustrating the discrimination potential of the apparatus. Variability is measured through MCDM, i.e. "mean color difference from the mean", the color difference being measured, in ΔE00 units, as a distance in the CIE 1976 L*a*b* color space. Increasing MCDM indicates increasing observer variability. The current standard color difference formula, CIEDE2000 (ΔE00) was used to compute color differences.

61 color-normal subjects participated in the experiment to evaluate the differentiating results. The observers' ages varied from 20 to 53, and the average age was 39. 39 observers were male while 22 observers were female. 20 observers were experienced observers and 41 observers were inexperienced. 53 observers over the 61 were Europeans. All the observers were instructed to participate in the experiment without eyeglasses or contact lenses since some of them contain UV filters that affect the blue primary of the first set of primaries (SW) used in the apparatus of the invention.

Using the sets of LEDs of the prior art described in table 1 above, the following results were found: average MCDM of 1.08 for inter-observer variability and 0.56 for intra-observer variability.

Using the sets of LEDs of the above embodiment described in table 3 above, the following results were found: average MCDM of 9.2 for inter-observer variability and 2.3 for intra-observer variability.

Therefore, compared to prior art shown in WO2011-124698, the inter-observer variability achievable by the apparatus above is significantly larger. Besides, the signal-to-noise ratio, i.e. the ratio of inter-observer variability to intra-observer variability is much higher with this apparatus. Therefore, the invention allows improving significantly the differentiation and discrimination of observers according to their color perception characteristics.

The LEDs chosen among 20 commercially LEDs with various peak wavelengths for the first and second sets of primaries in the apparatus described above were sought to produce as large observer variability as possible.

It was also found that, when using ΔEab for measuring color distances projected on a*b* plane of the Lab color space instead of using ΔE measuring three-dimensional distances in Lab color space as above, about the same average MCDMs were found as above, showing observer variability along the L* axis of the Lab color space is small. That, complementing a low variability between observers identified in the green region, explains why there is no specific requirement for the green primaries used in the apparatus of the invention, as far as they emits light at least within the range 500 nm - 550 nm.

Both apparatus above allow comparing/classifying color perception characteristics of any observer, i.e. a user of a video display device. Based on this comparison/classification, the image processing performed by such a video display device can be adjusted to achieve more accurate color reproduction specifically for this user. The observer class/comparison of this user can be switched by the push of a button included on the device, and corresponding user settings can be saved on this device, allowing several users having different color perception characteristics to perceive the same colors when displayed by this video color display device. Such advanced display processing capabilities can be highly useful in color-critical professional applications, for example in post-production.

Another application could be in the form of a useful instrument for color research laboratories in the industry and academia. As explained before, ability to pre-sort color observers into various color vision categories and/or to compare color observers can be immensely helpful in various psychophysical studies.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skilled in the art. It is to be understood that the invention may be implemented in various forms of hardware, software, firmware, special purpose processors, or combinations thereof.

**Claims**

1. Apparatus for comparing/classifying color perception characteristics of an actual color observer in comparison with at least one set of color perception characteristics, comprising:

   - a reference color display device configured for displaying colors using a first set of primaries to display colors, and a match color display device configured for displaying colors using a second set of primaries, wherein said first set of primaries comprises a first red primary, a first green primary and a first blue primary, wherein said second set of primaries comprises a second red primary, a second green primary and a second blue primary, wherein each of those primaries have a wavelength distribution centered on a main wavelength;
   - a color controller configured:

      - for controlling said reference color display device in order to display successively each color patch $(CP)_n$ of a test chart comprising a plurality of N different color patches $(CP)_{n=1 \text{ to } N}$, and,
      - each time a color patch $(CP)_n$ of said test chart is displayed by said reference color display device, for controlling said match display device in order to display said color patch $(CP)_n$ of said test chart in at least one displaying way, wherein each of this/these at least one displaying way(s) corresponds to a different set of color perception characteristics and displays a color which is perceived as the same color as that displayed by said reference color display device when displaying said color patch $(CP)_n$ by a class observer having color perception characteristics of the set corresponding to said displaying way;

      - A setting/determination controller configured to allow said actual color observer, each time a color patch $(CP)_n$ of said test chart is displayed by said reference colour display device and by said test colour display in this/these at least one displaying way(s),

      - to set a color display setting shift to apply to said controlling of the match display device such that said match display device displays a color which is perceived by said actual observer as matching the best his perception of the color displayed by said reference color display, and/or
      - to determine which of the M different displaying ways displays a color which is perceived by said actual observer as matching the best with his perception of the color displayed by said reference color device, said determined displaying way corresponding to a set of color perception characteristics defining an observer class;

      - An averaging/assignment module configured:

      - for averaging the different color display setting shifts that have been set by said setting/determination controller over the N different color patches $(CP)_{n=1 \text{ to } N}$ that have been displayed, resulting in an average color setting shift characterizing the color perception characteristics of said actual observer in comparison with those of the at least one set of color perception characteristics, and/or

- for assigning said actual observer to at least one observer class defined by a set of color perception characteristics corresponding to at least one of the most frequent determined displaying ways among the N different displaying ways that have been determined by said setting/determination controller over the display of the N different color patches $(CP)_{n=1 \text{ to } N}$, resulting in the classification of said actual observer to said at least one assigned observer class characterizing the color perception characteristics of said actual observer,

**characterized in that** the main wavelength of one among the first and second blue primary is inferior to 425 nm, and **in that** the main wavelength of the other among the first and second blue primary is superior to 425 nm.

2. Apparatus according to claim 1, wherein the wavelength shift between the main wavelengths of the blue primaries is superior to 60 nm.
Such a definition of the sets of primaries still improves the precision of comparison and/or classification of observers brought by the apparatus.

3. Apparatus according to any one of claims 1 to 2, wherein main wavelength of one among the first and second red primary is superior to 600 nm, and in that the main wavelength of the other among the first and second red primary is inferior to 600 nm

4. Apparatus according to any one of claims 1 to 3, wherein the wavelength shift between the main wavelengths of the red primaries is superior to 60 nm.

5. Apparatus according to any one of claims 1 to 4, wherein the distribution of wavelengths around the main wavelength of each primary gives a full width mid-height (FWMH) inferior or equal to 50 nm.

6. Apparatus according to any one of claims 1 to 5, wherein the distribution of wavelengths around the main wavelength of each of the blue primaries and the red primaries is inferior or equal to 30 nm.

7. Apparatus according to any one of claims 1 to 6, wherein the N different color patches $(CP)_{n=1 \text{ to } N}$ of said test chart comprise at least five different achromatic color patches.

8. Method for comparing/classifying color perception characteristics of an actual color observer in comparison with at least one set of color perception characteristics, using a reference color display device configured for displaying colors using a first set of primaries to display colors, and a match color display device configured for displaying colors using a second set of primaries,
wherein said first set of primaries comprises a first red primary, a first green primary and a first blue primary,
wherein said second set of primaries comprises a second red primary, a second green primary and a second blue primary,
wherein each of those primaries have a wavelength distribution centered on a main wavelength,
wherein the main wavelength of one among the first and second blue primary is inferior to 425 nm, and in that the main wavelength of the other among the first and second blue primary is superior to 425 nm,
said method comprising:

- controlling said reference color display device in order to display a first color patch $(CP)_1$ of a test chart comprising a plurality of N different color patches $(CP)_{n-1 \text{ to } N}$, and,
- controlling said match display device in order to display said color patch $(CP)_n$ of said test chart in at least one displaying way, wherein each of this/these at least one displaying way(s) corresponds to a different set of color perception characteristics and displays a color which is perceived as the same color as that displayed by said reference color display device when displaying said color patch $(CP)_n$ by a class observer having color perception characteristics of the set corresponding to said displaying way;
- allowing said actual color observer:
- to set a color display setting shift to apply to said controlling of the match display device such that said match display device displays a color which is perceived by said actual observer as matching the best his perception of the color displayed by said reference color display, and/or
- to determine which of the M different displaying ways displays a color which is perceived by said actual observer as matching the best with his perception of the color displayed by said reference color device, said determined displaying way corresponding to a set of color perception characteristics defining an observer class,
- controlling said reference color display device in order to display another color patch of the test chart, and reiterating the steps above with this other color patch until all color patch of the test chart are tested, and after all settings and/or determinations are performed by said actual observer for each color patch $(CP)_{n=1\,to\,N}$ of said test chart:

- averaging the different color display setting shifts that have been set over the N different color patches $(CP)_{n=1\,to\,N}$ that have been displayed, resulting in an average color setting shift characterizing the color perception characteristics of said actual observer in comparison with those of the at least one set of color perception characteristics, and/or

- assigning said actual observer to at least one observer class defined by a set of color perception characteristics corresponding to at least one of the most frequent determined displaying ways among the N different displaying ways that have been determined over the display of the N different color patches $(CP)_{n=1\,to\,N}$, resulting in the classification of said actual observer to said at least one assigned observer class characterizing the color perception characteristics of said actual observer.

9. Method according to claim 8, wherein the wavelength shift between the main wavelengths of the blue primaries is superior to 60 nm.

10. Method according to any one of claims 8 to 9, wherein main wavelength of one among the first and second red primary is superior to 600 nm, and in that the main wavelength of the other among the first and second red primary is inferior to 600 nm.

11. Method according to any one of claims 8 to 10, wherein the wavelength shift between the main wavelengths of the red primaries is superior to 60 nm.

12. Method according to any one of claims 8 to 11, wherein the distribution of wavelengths around the main wavelength of each primary gives a full width mid-height (FWMH) inferior or equal to 50 nm.

13. Method according to any one of claims 8 to 12, wherein the distribution of wavelengths around the main wavelength of each of the blue primaries and the red primaries is inferior or equal to 30 nm.

14. Method according to any one of claims 8 to 13, wherein the N different color patches $(CP)_{n=1\,to\,N}$ of said test chart comprise at least five different achromatic color patches.

Fig.1

Fig.2

Fig.3

Fig.4

Fig.5

Ref Display Device

Match Display Device

Top View

Fig.6

Controller

RGB set1

RGBW set2

LED driver

PWM

signals

LEDS (set1 & set2)

Commands

Light

Graphical User Interface

Light management

Observer

Fig.7

(CP)n

(CI)i

(Way of display)i

Test Displaying

Selection

Reference Displaying

Class (CI) assignement

Most frequent Class
over (CP)n

Fig.8

Europäisches
Patentamt

European
Patent Office

Office européen
des brevets

# EUROPEAN SEARCH REPORT

Application Number

EP 14 30 7027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2011/124698 A1 (THOMSON LICENSING [FR]; SARKAR ABHIJIT [FR]; BLONDE LAURENT [FR]; MORV) 13 October 2011 (2011-10-13) * the whole document * | 1-14 | INV. G01J3/46 G09G3/20 G09G5/02 |
| Y | PÉREZ-OCÓN F ET AL: "Contribution to the experimental review of the colorimetric standard observer", COLOR RESEARCH & APPLICATION, JOHN WILEY & SONS, INC, US, vol. 24, no. 5, 1 October 1999 (1999-10-01), pages 377-388, XP002535433, ISSN: 0361-2317 * abstract; table 1 * * page 381 - page 382 * | 1-14 | |
| A | SARKAR ET AL: "COLOURIMETRIC OBSERVER CATEGORIES AND THEIR APPLICATIONS IN COLOUR AND VISION SCIENCES", CIE CENTENRAY CONFERENCE, 16 April 2013 (2013-04-16), XP055194425, * abstract * | 1-14 | TECHNICAL FIELDS SEARCHED (IPC) G01J G09G |
| A | PATRICK MORVAN ET AL: "A handy calibrator for color vision of a human observer", MULTIMEDIA AND EXPO (ICME), 2011 IEEE INTERNATIONAL CONFERENCE ON, IEEE, 11 July 2011 (2011-07-11), pages 1-4, XP031964768, DOI: 10.1109/ICME.2011.6012090 ISBN: 978-1-61284-348-3 * the whole document * | 1-14 | |

The present search report has been drawn up for all claims

| Place of search | Date of completion of the search | Examiner |
|---|---|---|
| The Hague | 9 June 2015 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 7027

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2015

| Patent document cited in search report | Publication date | Patent family member(s) | Publication date |
|---|---|---|---|
| WO 2011124698 A1 | 13-10-2011 | EP 2556349 A1<br>US 2013027567 A1<br>WO 2011124698 A1 | 13-02-2013<br>31-01-2013<br>13-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011124698 A

- US 5103407 A